# EUROPÄISCHE PATENTSCHRIFT

(11) **EP 0 812 886 B1**
(45) Veröffentlichungstag und Bekanntmachung des Hinweises auf die Patenterteilung: **21.02.2001**
(21) Anmeldenummer: 97810354.7
(22) Anmeldetag: 05.06.1997
(51) Int. Cl.: C09B 62/453, C09B 62/475

(54) **Reaktivfarbstoffe, ihre Herstellung und Verwendung**
Reactive dyestuffs, their preparation and use thereof
Colorants réactifs, leur préparation et utilisation

(30) Priorität: 14.06.1996 CH 148496
(43) Veröffentlichungstag der Anmeldung: 17.12.1997
(73) Patentinhaber: Ciba Specialty Chemicals Holding Inc., 4057 Basel (CH)
(72) Erfinder: Reichert, Hans, 79618 Rheinfelden (DE)

(56) Entgegenhaltungen:
- EP-A- 0 131 545
- EP-A- 0 141 367
- EP-A- 0 309 405
- EP-A- 0 315 585
- EP-A- 0 374 758
- "Registry Handbook" 22.April 1997 , AMERICAN CHEMICAL SOCIETY, CHEMICAL ABSTRACTS SERVICE , COLUMBUS, OHIO, USA XP002041132 * Seite 6191RY, siehe Verbindung der Nummer: 180778-23-8 *
- "Registry Handbook" 4.März 1997 , AMERICAN CHEMICAL SOCIETY; CHEMICAL ABSTRACTS SERVICE , COLUMBUS, OHIO, USA XP002041133 * Seite 5152RY, siehe Verbindung der Nummer 179233-17-1 *

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungs stabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind Verbindungen der Formel 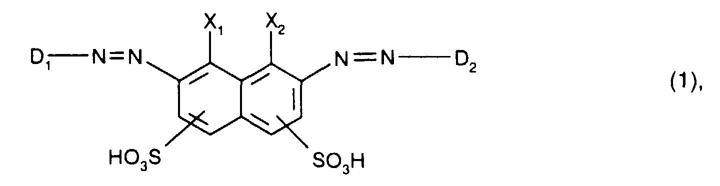 worin eine der Variablen X₁ und X₂ für Hydroxy und die andere für Amino steht, D₁ einen Rest der Formel 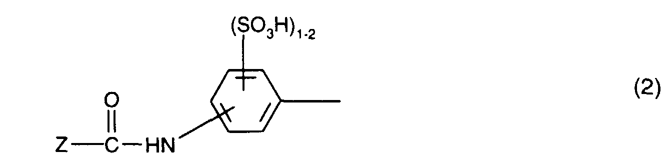 und D₂ einen Rest der Formel 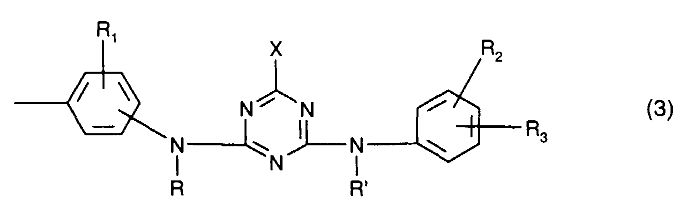 bedeutet,
R und R' unabhängig voneinander je Wasserstoff oder gegebenenfalls substituiertes C₁-C₄-Alkyl sind,
R₁ und R₂ unabhängig voneinander je für Wasserstoff, Sulfo, C₁-C₄-Alkyl, C₁-C₄-Alkoxy oder Halogen stehen,
R₃ ein faserreaktiver Rest der Formel

   -SO₂-Y (4a),

   -CONH-(CH₂)ₙ-SO₂-Y (4b)

   oder

   -NH-CO-Z (4c)

   ist,
X Halogen oder gegebenenfalls substituiertes Pyridinyl bedeutet,
Y Vinyl oder ein Rest -CH₂-CH₂-U und U eine Abgangsgruppe sind,
Z eine Gruppe -CHT-CH₂T oder -CT=CH₂ und T Brom oder Chlor bedeuten und
n für eine ganze Zahl von 1 bis 6 steht, und
Verbindungen der Formel 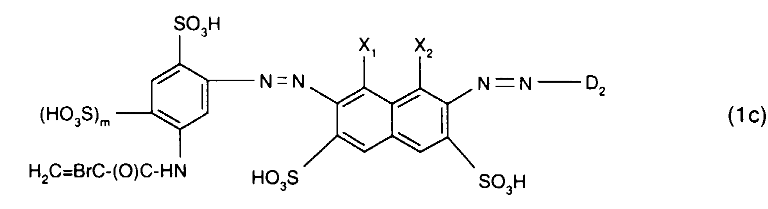 und 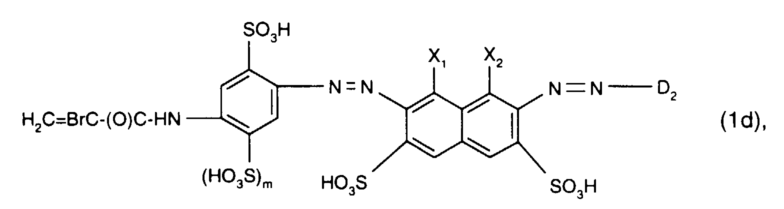 worin
X₁ und X₂ die oben angegebenen Bedeutungen haben,
m die Zahl 0 oder 1 ist und
D₂ einen Rest der Formel 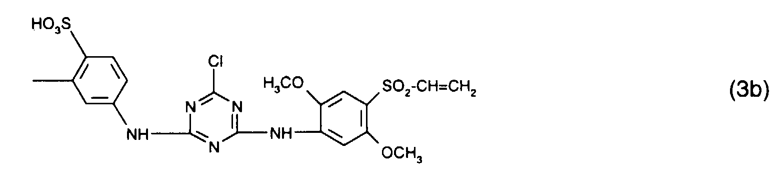
oder 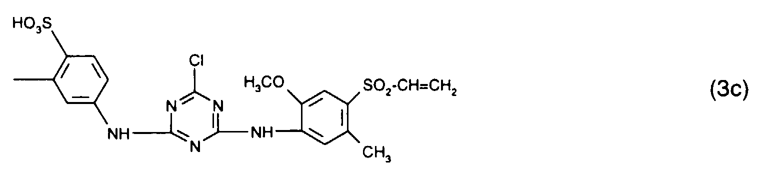 bedeutet.

In der EP-A-0 141 367 werden Farbstoffe beschrieben, die sich von den erfindungsgemässen Farbstoffen hinsichtlich unseres Rests D₂ unterscheiden.

Die in der EP-A-0 315 585 offenbarten Farbstoffe unterscheiden sich von den erfindungsgemässen Farbstoffen sowohl hinsichtlich unseres Rests D₁ als auch unseres Rests D₂.

Bedeuten R oder R' gegebenenfalls substituiertes C₁-C₄-Alkyl, kann es sich z.B. um unsubstituiertes oder z.B. durch Hydroxy, Sulfo, Sulfato, Carboxy, Cyano, Halogen, C₁-C₄-Alkoxycarbonyl oder Carbamoyl substituiertes Methyl, Ethyl, n- oder iso-Propyl oder n-, sec.-, tert.- oder iso-Butyl handeln.

R und R' bedeuten unabhängig voneinander je bevorzugt Wasserstoff oder unsubstituiertes oder durch Hydroxy substituiertes C₁-C₄-Alkyl, besonders bevorzugt Wasserstoff, Methyl oder Ethyl und insbesondere bevorzugt Wasserstoff.

R₁ steht bevorzugt für Wasserstoff, Methyl, Methoxy oder Sulfo, besonders bevorzugt für Wasserstoff oder Sulfo und insbesondere bevorzugt für Sulfo.

R₂ bedeutet bevorzugt Wasserstoff, Sulfo, Methyl oder Methoxy und besonders bevorzugt Wasserstoff oder Methoxy.

T bedeutet bevorzugt Brom.

Steht X für gegebenenfalls substituiertes Pyridinyl, handelt es sich z.B. um Pyridin-1-yl, 3-Carboxypyridin-1-yl oder 3-Carbamoylpyridin-1-yl. X bedeutet bevorzugt Halogen, z.B. Fluor, Chlor oder Brom, besonders bevorzugt Fluor oder Chlor und insbesondere bevorzugt Chlor.

Bedeutet Y einen Rest -CH₂-CH₂-U, so kann es sich bei der Abgangsgruppe U z.B. um -Cl, -Br, -F, -OSO₃H, -SSO₃H, -OCO-CH₃, OPO₃H₂, -OCO-C₆H₅, OSO₂-C₁-C₄-Alkyl oder -OSO₂-N(C₁-C₄-Alkyl)₂ handeln. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Y bedeutet bevorzugt Vinyl, β-Chlorethyl, β-Sulfatoethyl, β-Thiosulfatoethyl, β-Acetoxyethyl, β-Phenoxyethyl oder β-Phosphatoethyl und besonders bevorzugt β-Sulfatoethyl oder Vinyl.

n bedeutet bevorzugt die Zahl 2, 3 oder 4, besonders bevorzugt die Zahl 2 oder 3 und insbesondere bevorzugt die Zahl 2.

R₃ bedeutet bevorzugt einen faserreaktiven Rest der zuvor angegebenen Formel (4a).

Der Rest D₁ entspricht bevorzugt der Formel 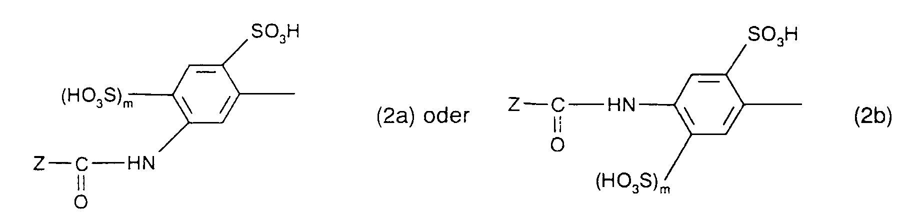 worin m die Zahl 0 oder 1 ist und für Z die zuvor angegebenen Bedeutungen und Bevorzugungen gelten. D₁ steht besonders bevorzugt für einen Rest der Formel (2a) und insbesondere bevorzugt für einen Rest der Formel (2a), worin Z Brom ist und m die Zahl 0 bedeutet.

Der Rest D₂ entspricht bevorzugt der Formel 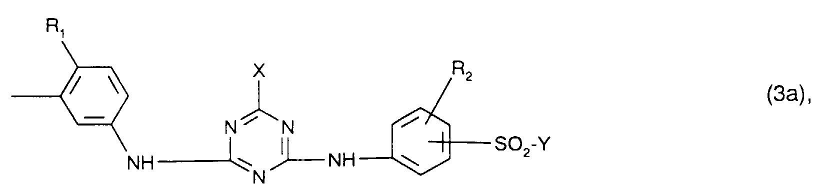 worin R₁ Wasserstoff oder vorzugsweise Sulfo, X Fluor oder vorzugsweise Chlor, R₂ Wasserstoff, Methoxy oder Sulfo und Y Vinyl oder β-Sulfatoethylsulfonyl sind.

Eine bevorzugte Untergruppe von erfindungsgemässen Verbindungen entspricht der Formel 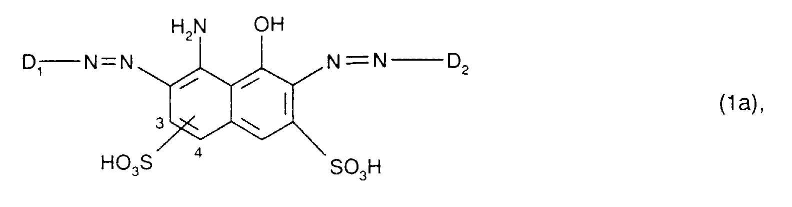 worin für D₁ und D₂ die zuvor angegebenen Bedeutungen und Bevorzugungen gelten und die zweite Sulfogruppe in der 4-Position oder vorzugsweise in der 3-Position des 1-Amino-8-hydroxynaphthalin-Kerns gebunden ist.

Eine weitere bevorzugte Untergruppe von erfindungsgemässen Verbindungen entspricht der Formel 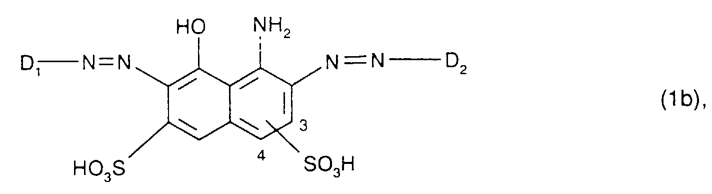 worin für D₁ und D₂ die zuvor angegebenen Bedeutungen und Bevorzugungen gelten und die zweite Sulfogruppe in der 4-Position oder vorzugsweise in der 3-Position des 1-Amino-8-hydroxynaphthalin-Kerns gebunden ist.

Die Verbindungen der Formel (1) bzw. (1a) oder (1b) enthalten mindestens drei und vorzugsweise mindestens vier Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium- oder Ammoniumsalze, das Salz des Mono-, Di- oder Triäthanolamins oder Na/Li- oder Na/Li/NH₄-Mischsalze genannt.

Gegenstand der vorliegenden Erfindung ist ferner ein Verfahren zur Herstellung von Reaktivfarbstoffen der Formel (1), welches dadurch gekennzeichnet ist, dass man je in etwa 1 Moläquivalent einer Verbindung der Formel

D₁- NH₂ (5a),

D₂-NH₂ (5b)

und 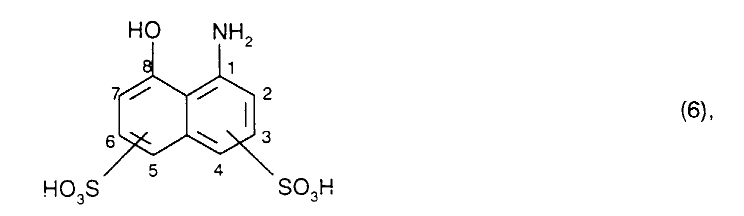 durch Diazotieren und Kuppeln in beliebiger Reihenfolge miteinander umsetzt, wobei D₁, D₂, X₁ und X₂ jeweils die zuvor angegebene Bedeutung haben.

Die Diazotierung der Verbindungen der Formel (5a) und (5b) erfolgt in üblicher Weise, z.B. indem man die Verbindung der Formel (7) in mineralsaurer Lösung, z.B. salzsaurer Lösung mit einem Nitrit, z.B. Natriumnitrit, bei niedriger Temperatur, z.B. bei 0 bis 5°C, diazotiert.

Die Kupplung der diazotierten Verbindungen der Formeln (5a) und (5b) mit der Verbindung der Formel (6) erfolgt ebenso in an sich bekannter Weise, zweckmässigerweise, indem man in einem neutralen bis leicht sauren Medium, z.B. bei pH 3 bis 7 und bevorzugt 5 bis 6,5, und niedrigen Temperaturen, z.B. 0 bis 30°C, nacheinander mit der 2fach kuppelnden Kupplungskomponente kuppelt.

Die Verbindungen der Formeln (5a), (5b und (6) sind bekannt oder können in Analogie zu bekannten Verbindungen hergestellt werden. Die etwaige Einführung des Pyridinylrests X erfolgt in der Regel im Anschluss an eine Kondensationsreaktion der entsprechenden Cyanurhalogenide.

Die erfindungsgemässen Farbstoffe sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffmischungen und die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe und insbesondere die erfindungsgemässen Farbstoffmischungen eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

(i) 40 Teile 5-(2,3-Dibrompropionylamido)-anilin-2-sulfosäure werden in 400 Teilen Wasser suspendiert, mit 7 Teilen Natriumnitrit, 50 Teilen Eis und 30 Teilen konz. Salzsäure versetzt und drei Stunden lang gerührt. Danach wird das überschüssige Nitrit vernichtet und eine neutrale Lösung von 32 Teilen 1-Amino-8-naphthol-3,6-disulfosäure in 300 Teilen Wasser so zugetropft, dass ein pH-Wert von 2,5 nicht überschritten wird. Man hebt den pH-Wert der Reaktionsmischung innerhalb von zwei Stunden mit verdünnter Natriumacetat-Lösung auf 4 an und lässt die Temperatur dabei auf 15°C ansteigen. Nach beendeter Kupplung erhält man Reaktionsmischung 1, in der die Verbindung folgender Formel enthalten ist 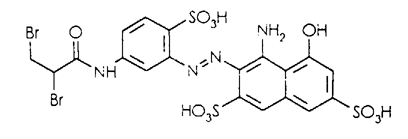
(ii) 19 Teile Cyanurchlorid werden mit 50 Teilen Eis/Wasser und 5 Teilen Dinatriumhydrogenphosphat unter Zusatz eines Netzmittels 15 Minuten lang kräftig durchmischt. Zu dieser Suspension werden portionsweise 28 Teile 2-(4-Aminophenylsulfonyl)-ethylhydrogensulfat gegeben. Man hält den pH-Wert danach noch zwei Stunden bei 4 durch Zugabe von verdünnter Natriumhydroxid-Lösung. Nach beendeter Kondensation wird auf Raumtemperatur erwärmt, der pH-Wert auf 5,5 erhöht und eine neutrale Lösung von 17 Teilen 2,4-Diaminobenzolsulfonsäure in 200 Teilen Wasser zugetropft. Bis zum Reaktionsende wird ein pH-Wert von 5,5 aufrechterhalten. Die Reaktionsmischung wird auf 0°C abgekühlt, mit 7 Teilen Natriumnitrit, 50 Teilen Eis und 30 Teilen konz. Salzsäure versetzt und zwei Stunden lang kräftig gerührt. Danach wird überschüssiges Nitrit mit wenig Sulfaminsäure vernichtet (Reaktionsmischung 2).
(iii) Bei einem pH-Wert von 6.5 und einer Innentemperatur von 5°C wird Reaktionsmischung 1 vorgelegt, Reaktionsmischung 2 langsam zugetropft und dabei der pH-Wert mit verdünnter Natriumhydroxidlösung zwischen 6,5 und 7 gehalten. Nach beendeter Kupplung wird umkehrosmotisiert und im Vakuum eingedampft. Man erhält den Farbstoff der Formel 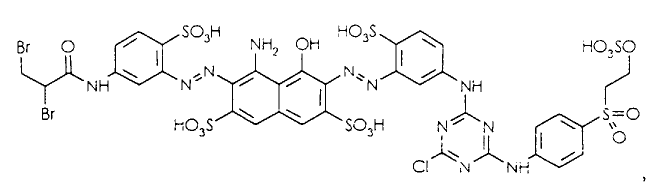 der Baumwolle in einer marineblauen Nuance mit guten Allgemeinechtheiten färbt.

### Beispiel 2:

Man verfährt wie in den Schritten (i) und (ii) des Beispiels 1 angegeben. Anschliessend wird bei einem pH-Wert von 6,5 und einer Innentemperatur von 5°C die Reaktionsmischung 1 vorgelegt und Reaktionsmischung 2 langsam zugetropft, wobei der pH-Wert mit verdünnter Natriumhydroxidlösung zwischen 6,5 und 7 gehalten wird. Nach beendeter Kupplung erwärmt man die Reaktionsmischung auf eine Innentemperatur von 30°C, rührt 15 Minuten bei einem pH-Wert von 11 und neutralisiert danach mit verdünnter Salzsäure. Anschliessend wird umkehrosmotisiert und im Vakuum eingedampft. Man erhält den Farbstoff der Formel 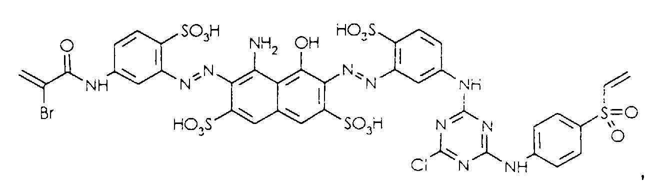 der Baumwolle in einer marineblauen Nuance mit guten Allgemeinechtheiten färbt.

### Beispiel 3:

Verfährt man wie in Beispiel 1 beschrieben, rührt jedoch zusätzlich die gemäss Schritt (i) des Beispiels 1 erhältliche Reaktionsmischung 15 Minuten bei einer Temperatur von 40°C und einem pH-Wert von 9, so erhält man den Farbstoff der Formel 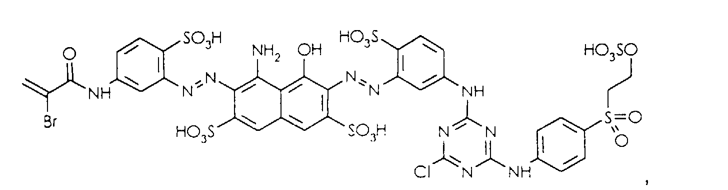 der Baumwolle in einer marineblauen Nuance mit guten Allgemeinechtheiten färbt.

Beispiele 4-16: Analog wie im Beispiel 2 beschrieben lassen sich die Verbindungen der Formel 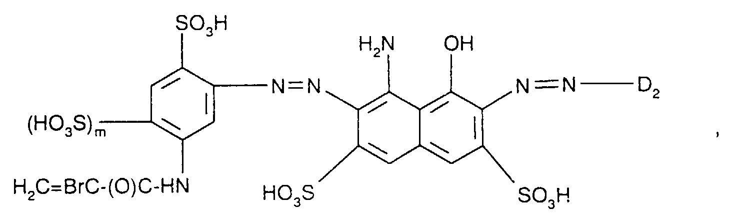 worin D₂ die unten angegebene Bedeutung hat, herstellen.

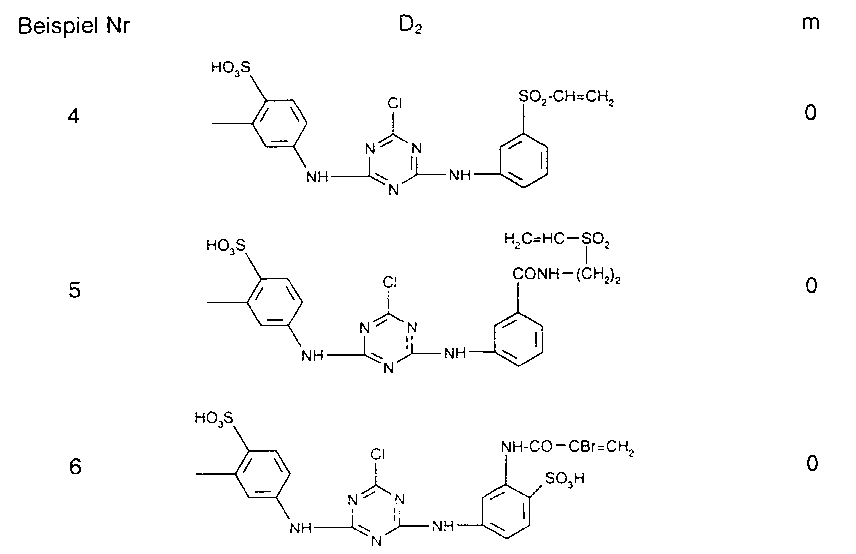

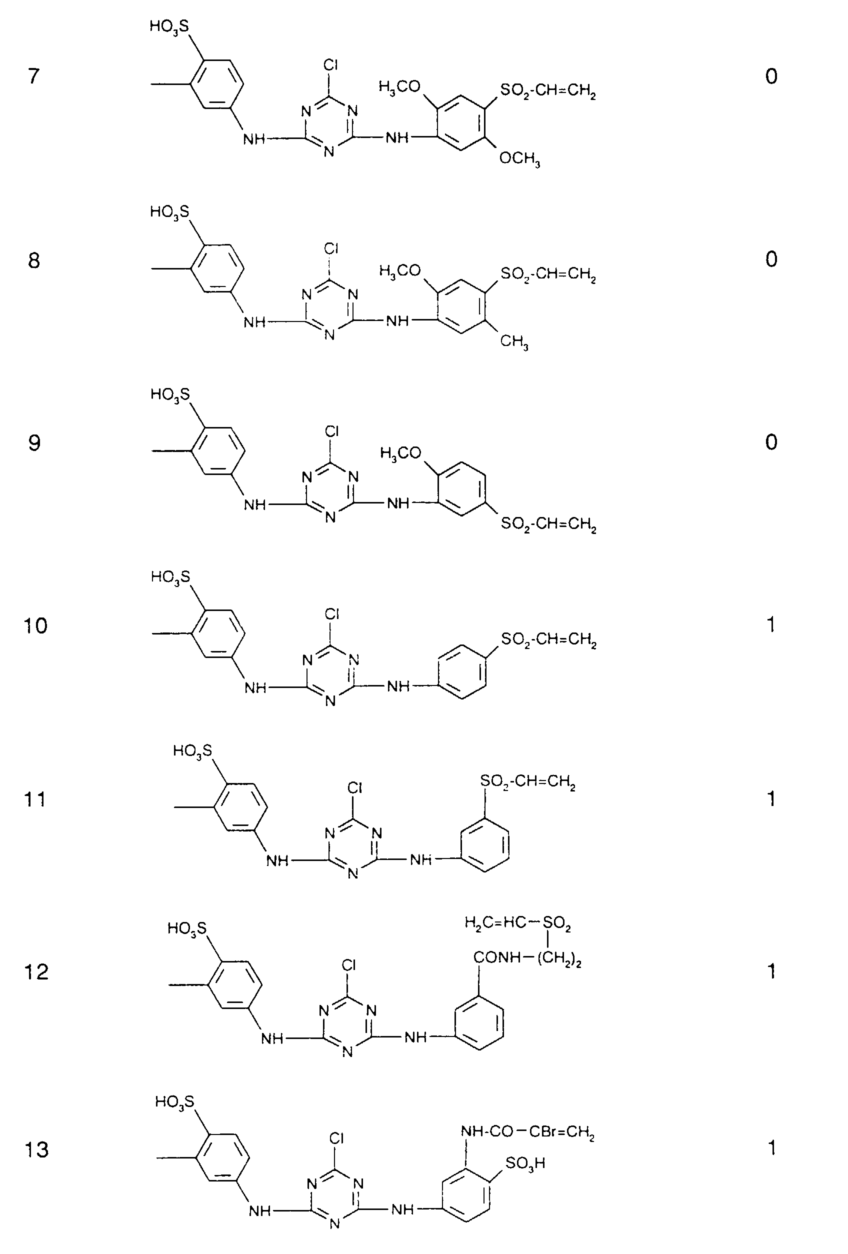

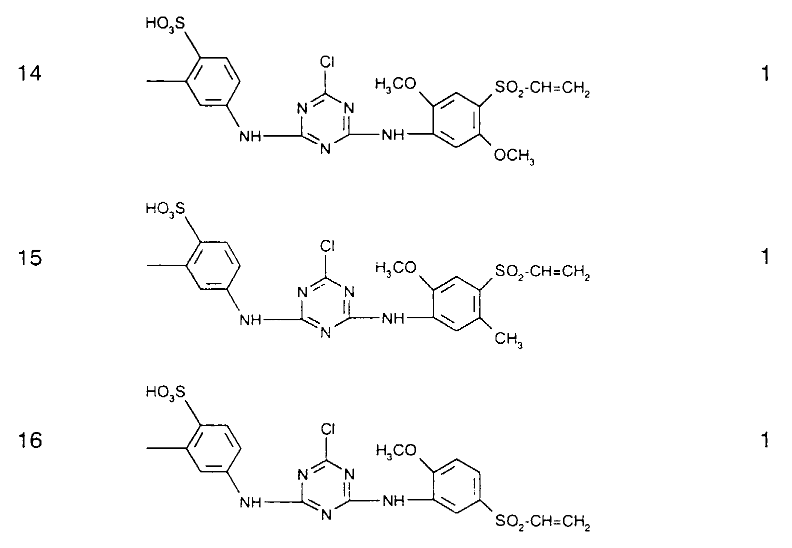

Beispiele 17-30: Analog wie im Beispiel 2 beschrieben lassen sich die Verbindungen der Formel 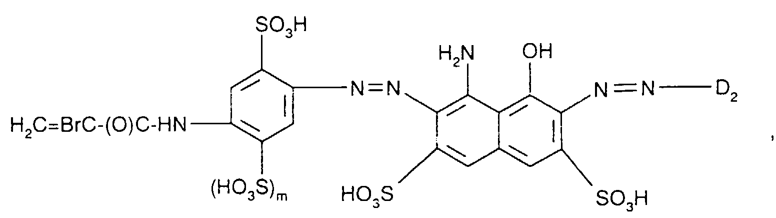 worin D₂ die unten angegebene Bedeutung hat, herstellen.

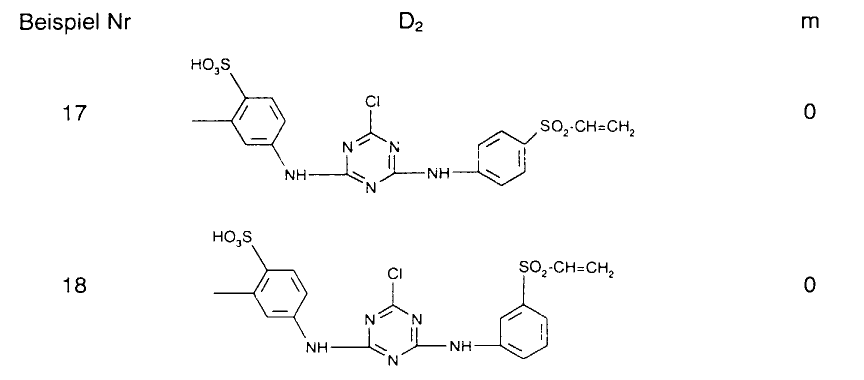

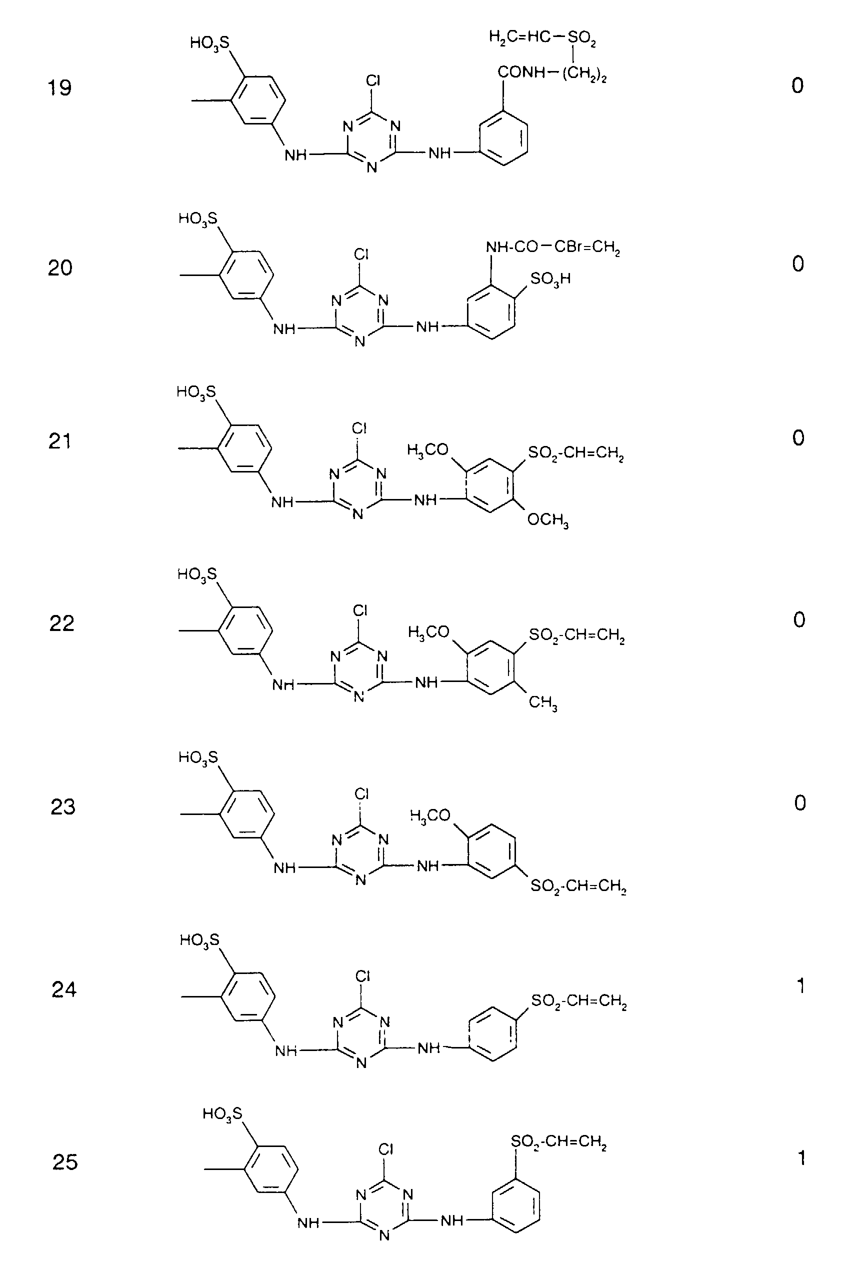

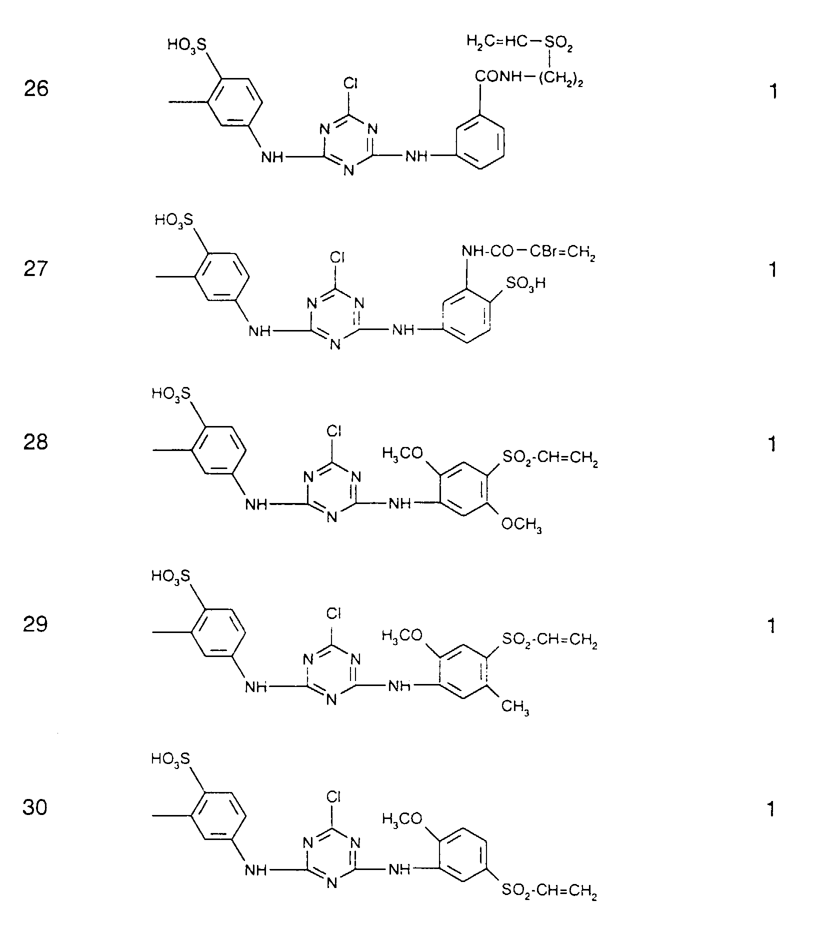

Farbstoffe der Beispiele 4 bis 30, welche jeweils anstelle der Gruppe der Formel
-NH-CO-C(Br)=CH₂ eine Gruppe der Formel -NH-CO-CH(Br)-CH₂Br enthalten und, falls in den Farbstoffen vorhanden, anstelle der Gruppe der Formel
-SO₂-CH=CH₂ eine Gruppe der Formel -SO₂-CH₂CH₂-OSO₃H enthalten und, falls in den Farbstoffen vorhanden, anstelle der Gruppe der Formel
-CONH-(CH₂)₂-SO₂-CH=CH₂ eine Gruppe der Formel -CONH-(CH₂)₂-SO₂-CH₂CH₂-OSO₃H enthalten,
können analog den Angaben in Beispiel 1 erhalten werden.

Farbstoffe der Beispiele 4 bis 30, welche, falls in den Farbstoffen vorhanden, anstelle der Gruppe der Formel
-SO₂-CH=CH₂ eine Gruppe der Formel -SO₂-CH₂CH₂-OSO₃H enthalten und, falls in den Farbstoffen vorhanden, anstelle der Gruppe der Formel
-CONH-(CH₂)₂-SO₂-CH=CH₂ eine Gruppe der Formel -CONH-(CH₂)₂-SO₂-CH₂CH₂-OSO₃H enthalten, und falls im Rest D₂ der Farbstoffe enthalten, im Rest D₂ anstelle der Gruppe der Formel
-NH-CO-C(Br)=CH₂ eine Gruppe der Formel -NH-CO-CH(Br)-CH₂Br enthalten,
können analog den Angaben in Beispiel 3 erhalten werden.

### Beispiel 31:

(i) 31 Teile 2-(3-Amino-4-methoxyphenylsulfonyl)-ethyl-hydrogensulfat werden bei 0°C in 200 Teilen Wasser und 5 Teilen Dinatriumhydrogenphosphat unter Netzmittel-Zusatz angeschlämmt. Mit verdünnter Natriumhydroxidlösung stellt man auf einen pH-Wert von 4 ein, versetzt portionsweise mit 19 Teilen Cyanurchlorid und hält den pH-Wert für die Dauer der Reaktion konstant bei 4. Anschliessend wird auf 15°C erwärmt und eine neutrale Lösung von 17 Teilen 2,4-Diaminobenzolsulfonsäure in 200 Teilen Wasser zugetropft, der pH-Wert dabei auf 5,5 erhöht und gehalten. Man kühlt die Reaktionsmischung auf 5°C ab, gibt 50 Teile Eis und 30 Teile konz. Salzsäure zu, tropft 25 Teile einer 28%igen Natriumnitrit-Lösung zu und rührt zwei Stunden bei 5°C. Nach der Diazotierung wird überschüssiges Nitrit mit Sulfaminsäure vernichtet und eine neutrale Lösung von 32 Teilen 1-Amino-8-naphthol-3,6-disulfosäure in 300 Teilen Wasser so zugetropft, dass der pH-Wert der Reaktionsmischung unter 2,5 bleibt. Danach wird der pH erst mit verdünnter Natriumacetat-Lösung, dann mit verdünnter Natriumhydroxidlösung auf 6,5 angehoben. Man erhält die Reaktionsmischung 3, in der die Verbindung folgender Formel enthalten ist 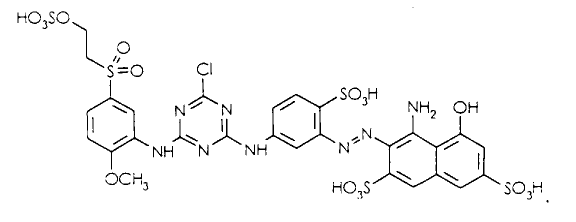
(ii) 40 Teile 5-(2,3-Dibrompropionylamido)-anilin-2-sulfosäure werden in 400 Teilen Wasser suspendiert, gemäss Beispiel 1 diazotiert, und bei pH 6,5 zu der oben hergestellten Reaktionsmischung 3 getropft. Nach Ende der Reaktion erwärmt man auf 30°C, rührt 15 Minuten bei pH 11, neutralisiert und entsalzt die Reaktionsmischung durch Umkehrosmose.

Nach dem Entfernen des Lösungsmittels unter vermindertem Druck erhält man die Verbindung der Formel 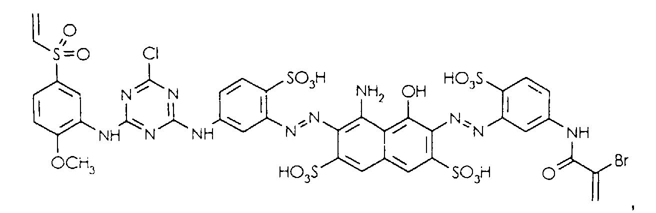 die Baumwolle in tiefblauen Tönen mit guten Allgemeinechtheiten färbt.

### Beispiel 32:

Verfährt man wie in Beispiel 31 angegeben, führt jedoch in Schritt (ii) des Beispiels 31 nach Ende der Reaktion keine Behandlung bei pH 11 aus, so erhält man die Verbindung der Formel 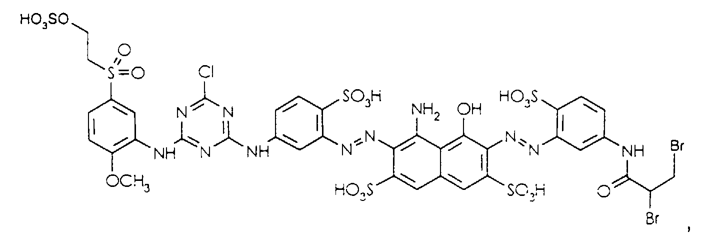 die Baumwolle in tiefblauen Tönen mit guten Allgemeinechtheiten färbt.

### Beispiel 33:

Verfährt man wie in Beispiel 31 angegeben, rührt jedoch zusätzlich die gemäss Schritt (i) des Beispiels 31 erhältliche Reaktionsmischung 15 Minuten bei einer Temperatur von 30°C und einem pH-Wert von 11 mit anschliessender Neutralisation, und führt in Schritt (ii) des Beispiels 31 nach Ende der Reaktion keine Behandlung bei pH 11 aus, so erhält man die Verbindung der Formel 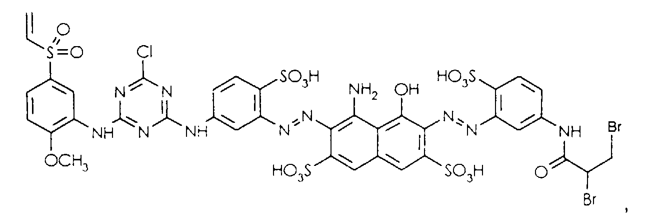 die Baumwolle in tiefblauen Tönen mit guten Allgemeinechtheiten färbt.

Beispiele 34-46: Analog wie im Beispiel 31 beschrieben lassen sich die Verbindungen der Formel 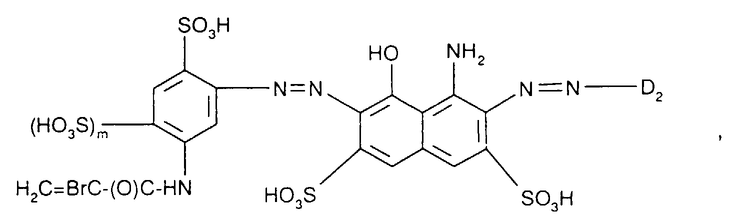 worin D₂ die unten angegebene Bedeutung hat, herstellen.

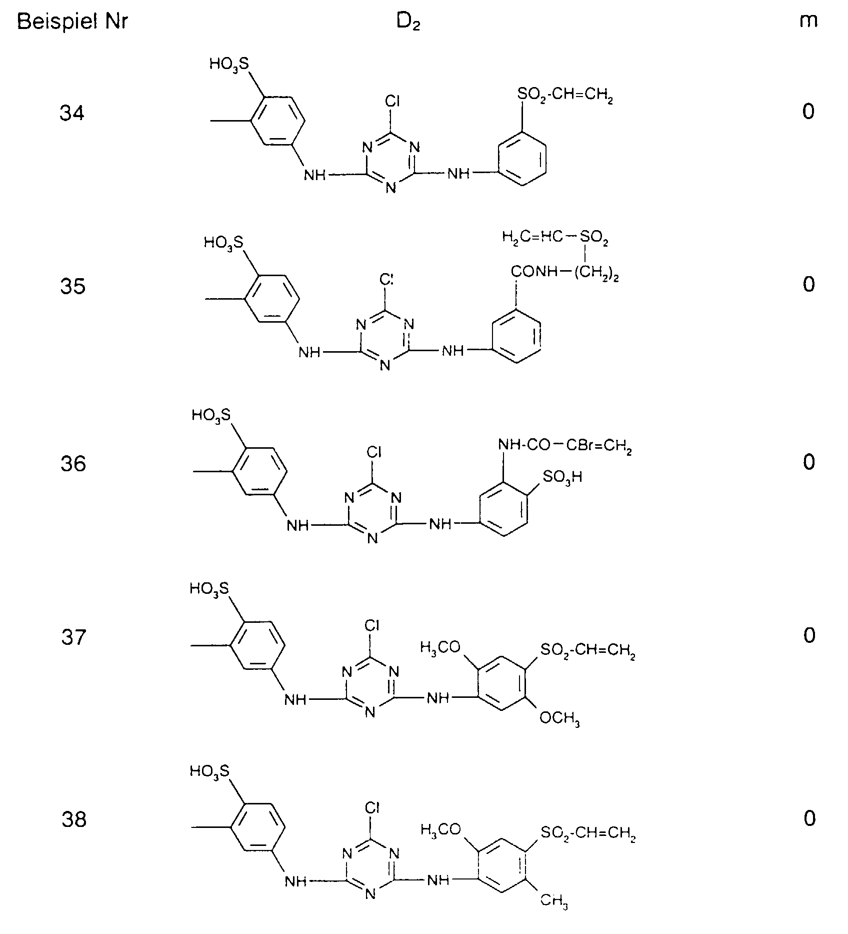

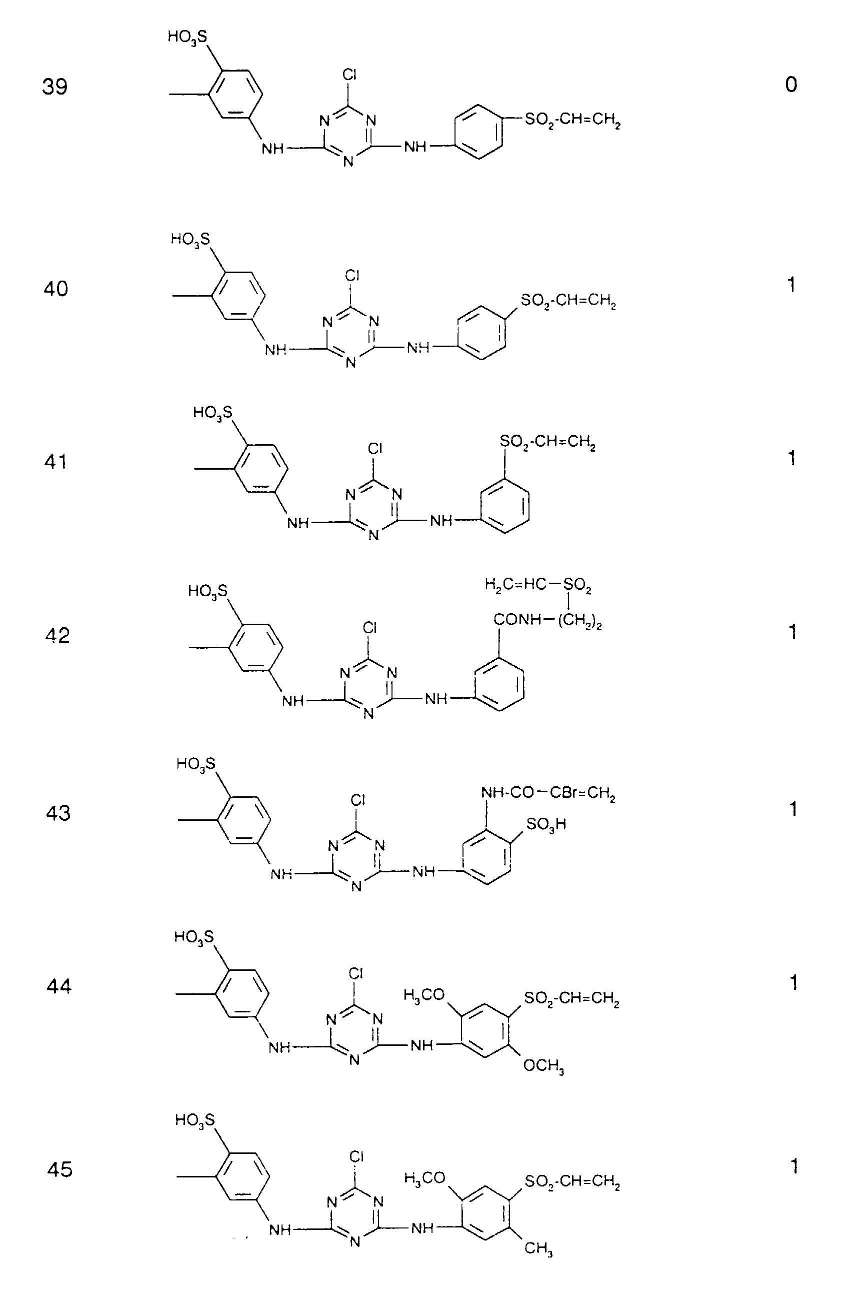

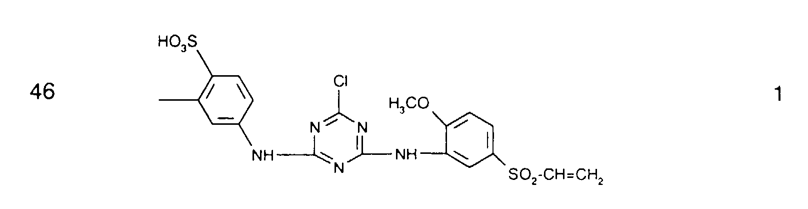

Beispiele 47-60: Analog wie im Beispiel 31 beschrieben lassen sich die Verbindungen der Formel 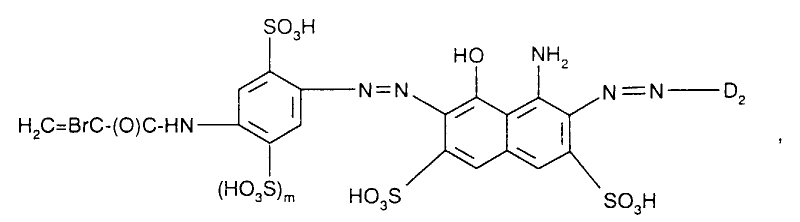 worin D₂ die unten angegebene Bedeutung hat, herstellen.

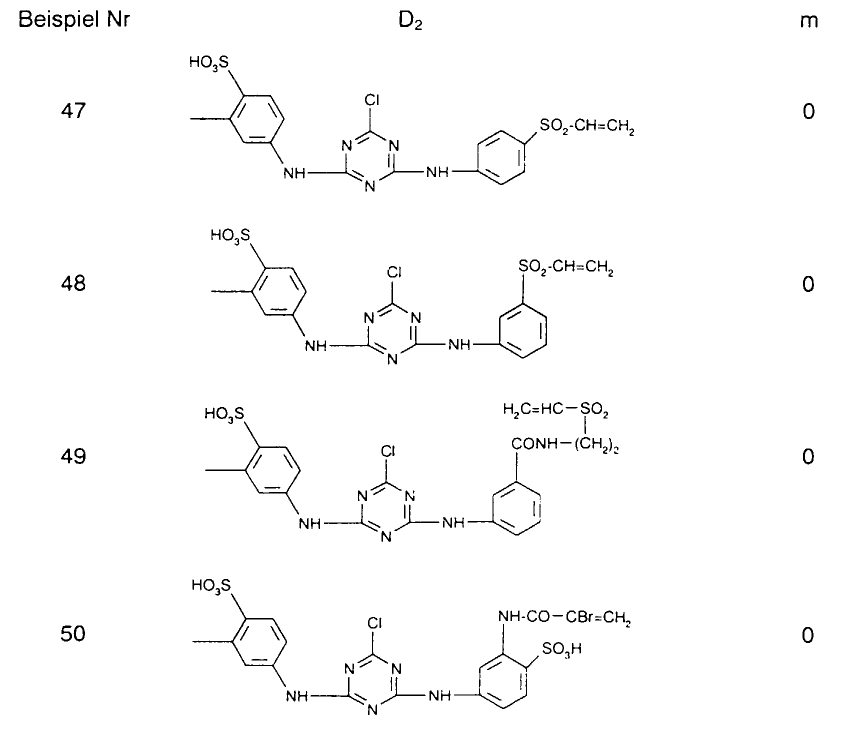

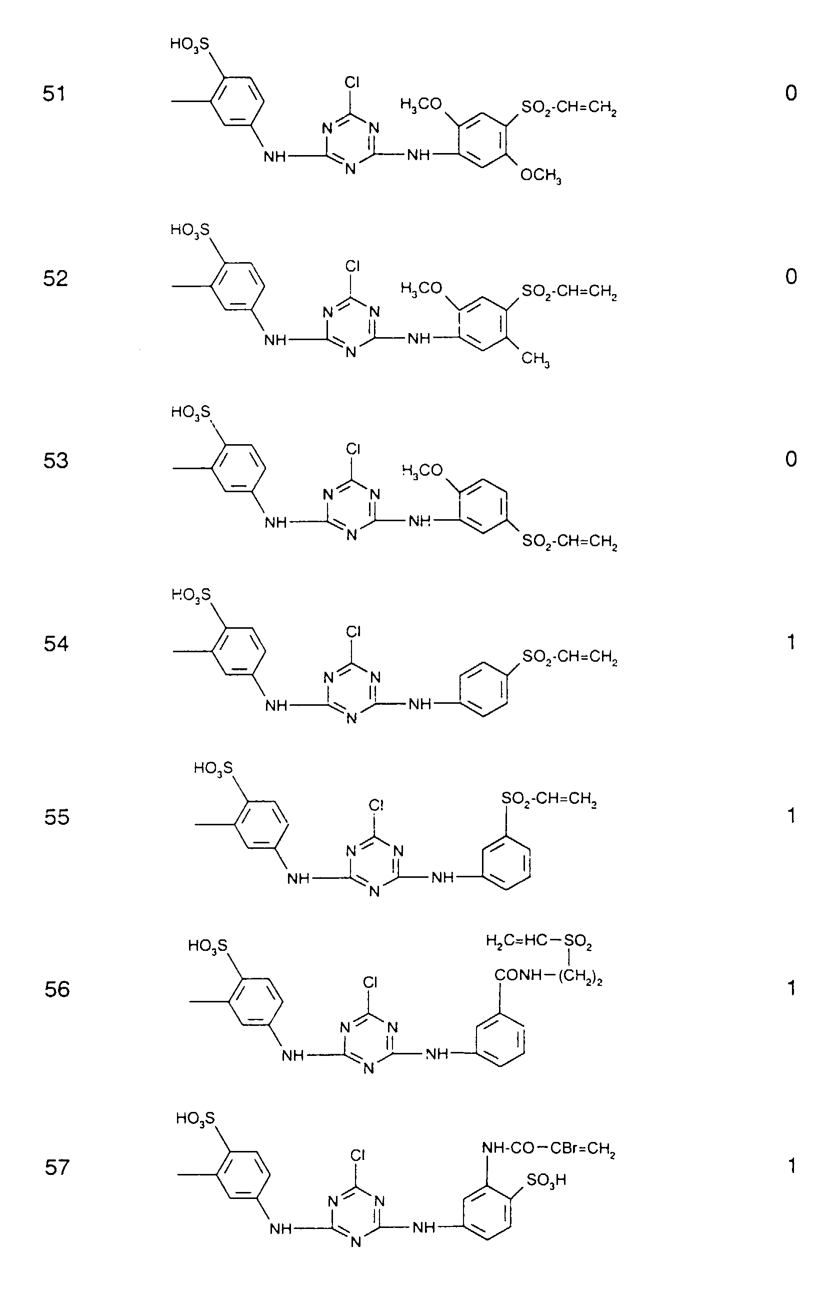

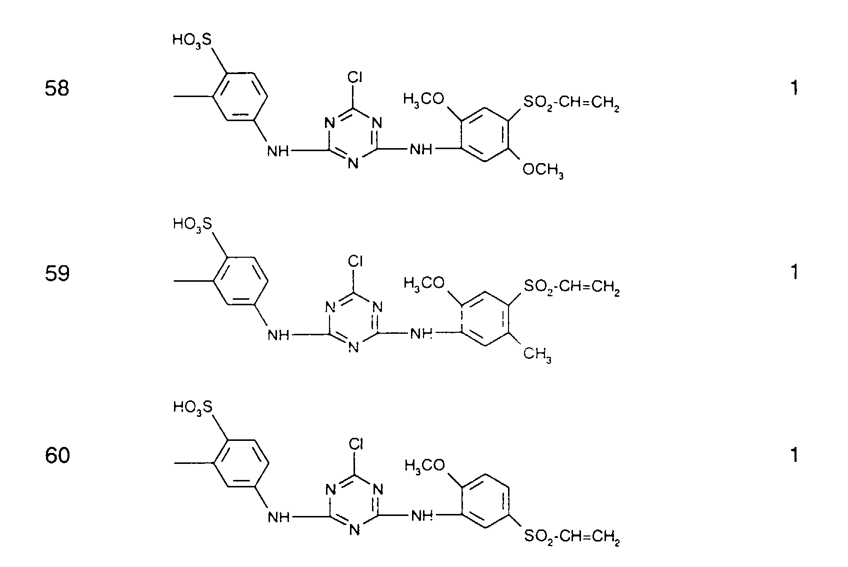

Farbstoffe der Beispiele 34 bis 60, welche jeweils anstelle der Gruppe der Formel
-NH-CO-C(Br)=CH₂ eine Gruppe der Formel -NH-CO-CH(Br)-CH₂Br enthalten und, falls in den Farbstoffen vorhanden, anstelle der Gruppe der Formel
-SO₂-CH=CH₂ eine Gruppe der Formel -SO₂-CH₂CH₂-OSO₃H enthalten und, falls in den Farbstoffen vorhanden, anstelle der Gruppe der Formel
-CONH-(CH₂)₂-SO₂-CH=CH₂ eine Gruppe der Formel -CONH-(CH₂)₂-SO₂-CH₂CH₂-OSO₃H enthalten,
können analog den Angaben in Beispiel 32 erhalten werden.

Farbstoffe der Beispiele 34 bis 60, welche jeweils anstelle der in meta- oder para-Stellung zur Azobrücke gebundenen Gruppe der Formel
-NH-CO-C(Br)=CH₂ eine Gruppe der Formel -NH-CO-CH(Br)-CH₂Br enthalten,
können analog den Angaben in Beispiel 33 erhalten werden.

### Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift II

2 Teile des gemäss Beispiel 2 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Färbevorschrift III

8 Teile des gemäss Beispiel 3 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

### Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

6 Teile des gemäss Beispiel 2 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäss Beispiel 3 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Färbevorschrift VII

0,1 Teile Farbstoff gemäss Beispiel 1 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und färbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine brillante Färbung erhalten, die sehr gute Licht- und Nassechtheiten aufweist.

### Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II: 5 Teile des gemäss Beispiel 2 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel 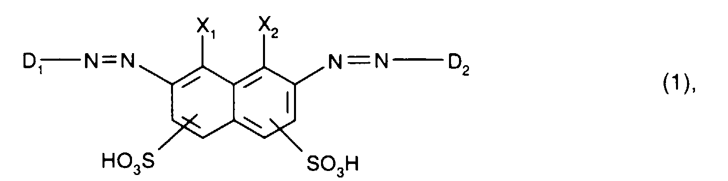 worin eine der Variablen X₁ und X₂ für Hydroxy und die andere für Amino steht, D₁ einen Rest der Formel 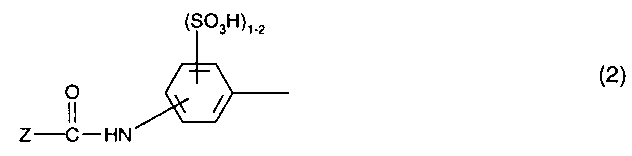 und D₂ einen Rest der Formel 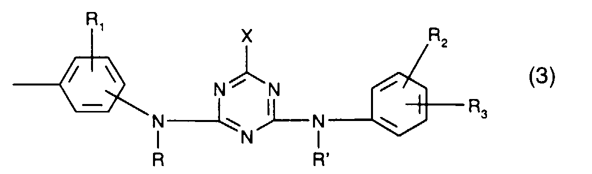 bedeutet,
R und R' unabhängig voneinander je Wasserstoff oder gegebenenfalls substituiertes C₁-C₄-Alkyl sind, R₁ und R₂ unabhängig voneinander je für Wasserstoff, Sulfo, C₁-C₄-Alkyl, C₁-C₄-Alkoxy oder Halogen stehen,
R₃ ein faserreaktiver Rest der Formel
-SO₂-Y (4a),
-CONH-(CH₂)ₙ-SO₂-Y (4b)
oder
-NH-CO-Z (4c)
ist,
X Halogen oder gegebenenfalls substituiertes Pyridinyl bedeutet,
Y Vinyl oder ein Rest -CH₂-CH₂-U und U eine Abgangsgruppe sind,
Z eine Gruppe -CHT-CH₂T oder -CT=CH₂ und T Brom oder Chlor bedeuten und
n für eine ganze Zahl von 1 bis 6 steht, und
Verbindungen der Formel 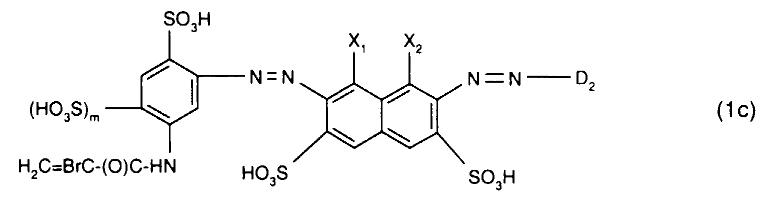 und 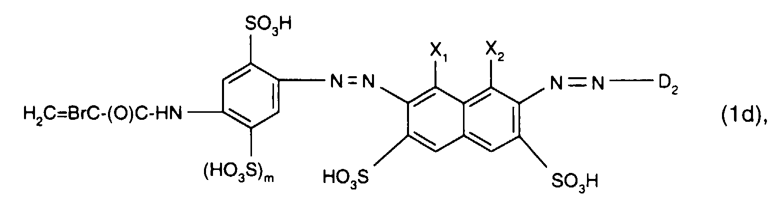 worin
X₁ und X₂ die oben angegebenen Bedeutungen haben,
m die Zahl 0 oder 1 ist und
D₂ einen Rest der Formel 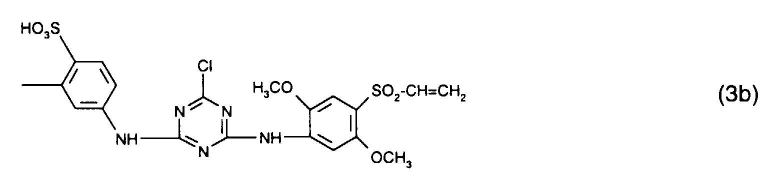
oder 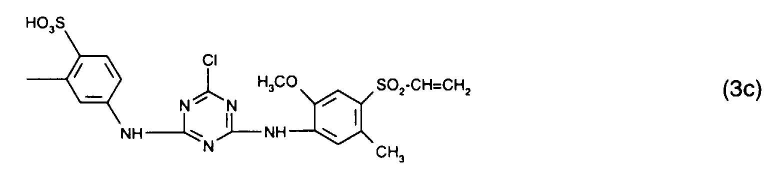 bedeutet.

2. Verbindungen gemäss Anspruch 1, dadurch gekennzeichnet, dass X Fluor oder Chlor und R und R' unabhängig voneinander je Wasserstoff oder C₁-C₄-Alkyl, besonders Wasserstoff, bedeuten.

3. Verbindungen gemäss Anspruch 1 oder 2, dadurch gekennzeichnet, dass R₁ und R₂ unabhängig voneinander je Wasserstoff, Methyl , Methoxy oder Sulfo bedeuten.

4. Verbindungen gemäss einem der Ansprüche 1 bis 3, dadurch gekennzeichnet, dass R₃ einen faserreaktiven Rest der im Anspruch 1 angegebenen Formel (4a) bedeutet.

5. Verbindungen gemäss einem der Ansprüche 1 bis 4, dadurch gekennzeichnet, dass D₁ ein Rest der Formel 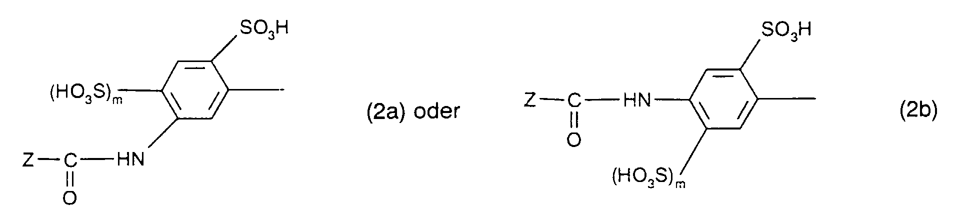 ist, worin m die Zahl 0 oder 1 ist und für Z die im Anspruch 1 angegebene Bedeutung hat.

6. Verbindungen gemäss einem der Ansprüche 1 bis 5, dadurch gekennzeichnet, dass D₂ ein Rest der Formel 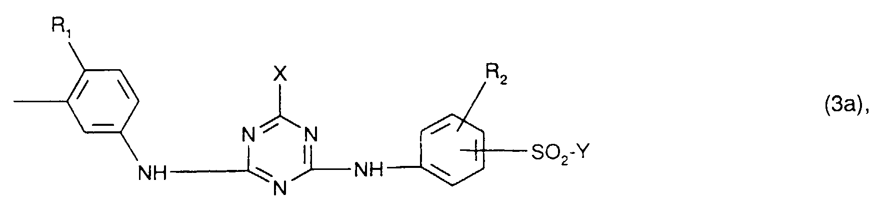 ist, worin R₁ Wasserstoff oder Sulfo, X Fluor oder Chlor, R₂ Wasserstoff, Methoxy oder Sulfo und Y Vinyl oder β-Sulfatoethylsulfonyl sind.

7. Verbindungen gemäss Anspruch 1 der Formel 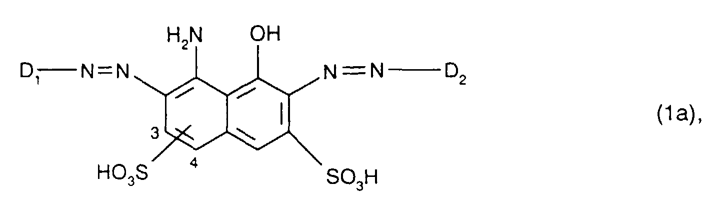 worin D₁ und D₂ die im Anspruch 1 angegebene Bedeutung haben und die zweite Sulfogruppe in der 4-Position oder vorzugsweise in der 3-Position des 1-Amino-8-hydroxynaphthalin-Kerns gebunden ist.

8. Verbindungen gemäss Anspruch 1 der Formel 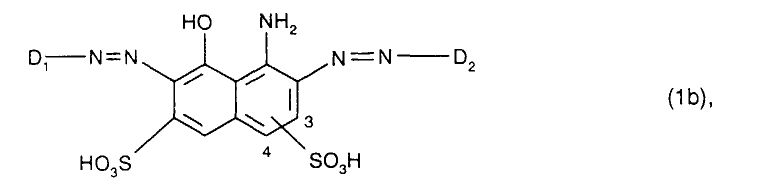 worin D₁ und D₂ die im Anspruch 1 angegebene Bedeutung haben und die zweite Sulfogruppe in der 4-Position oder vorzugsweise in der 3-Position des 1-Amino-8-hydroxynaphthalin-Kerns gebunden ist.

9. Verbindungen gemäss Anspruch 7 der Formel (1a), worin die zweite Sulfogruppe in der 3-Position des 1-Amino-8-hydroxynaphthalin-Kerns gebunden ist, und D₁ einen Rest der im Anspruch 5 angegebenen Formel (2a) und D₂ einen Rest der im Anspruch 6 angegebenen Formel (3a) bedeuten.

10. Verbindungen gemäss Anspruch 8 der Formel (1b), worin die zweite Sulfogruppe in der 3-Position des 1-Amino-8-hydroxynaphthalin-Kerns gebunden ist und D₁ einen Rest der im Anspruch 5 angegebenen Formel (2a) und D₂ einen Rest der im Anspruch 6 angegebenen Formel (3a) bedeuten.

11. Verfahren zur Herstellung von Verbindungen der Formel (1) gemäss Anspruch 1, dadurch gekennzeichnet, dass man je in etwa 1 Moläquivalent einer Verbindung der Formel
D₁- NH₂ (5a),
D₂-NH₂ (5b)
und 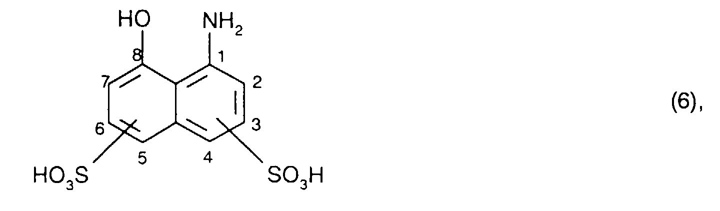 durch Diazotieren und Kuppeln in beliebiger Reihenfolge miteinander umsetzt, wobei D₁, D₂, X₁ und X₂ jeweils die im Anspruch 1 angegebene Bedeutung haben.

12. Verwendung von Verbindungen der Formel (1) gemäss Anspruch 1 zum Färben oder Bedrucken von hydroxylgruppenhaltigen oder stickstoffhaltigen Fasermaterialien.

13. Verwendung gemäss Anspruch 12 zum Färben oder Bedrucken von cellulosehaltigen Fasermaterialien, insbesondere von baumwollhaltigen Fasermaterialien.

## Claims

1. A compound of the formula 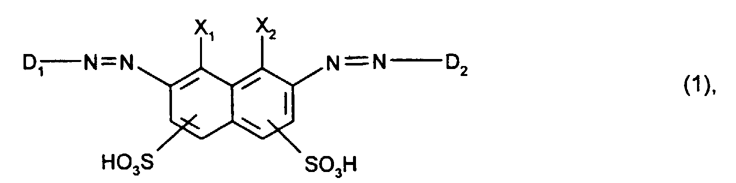 in which one of the variables X₁ and X₂ is hydroxyl and the other is amino,
D₁ is a radical of the formula 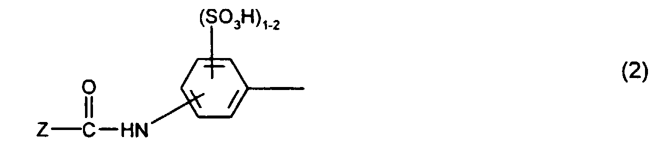 and
D₂ is a radical of the formula 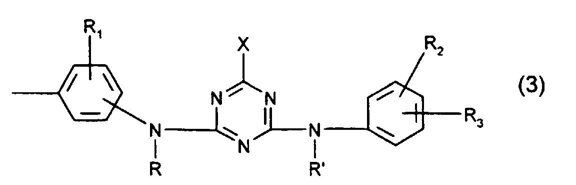
R and R', independently of one another, are each hydrogen or substituted or unsubstituted C₁-C₄alkyl, R₁ and R₂, independently of one another, are each hydrogen, sulfo, C₁-C₄alkyl, C₁-C₄alkoxy or halogen,
R₃ is a fibre-reactive radical of the formula
-SO₂-Y (4a),
-CONH-(CH₂)ₙ-SO₂-Y (4b)
or
-NH-CO-Z (4c)
X is halogen or substituted or unsubstituted pyridinyl,
Y is vinyl or a radical -CH₂CH₂-U and U is a leaving group,
Z is a group -CHT-CH₂T oder -CT=CH₂ and T is bromine or chlorine and
n is an integer from 1 to 6, and
or a compound of the formula 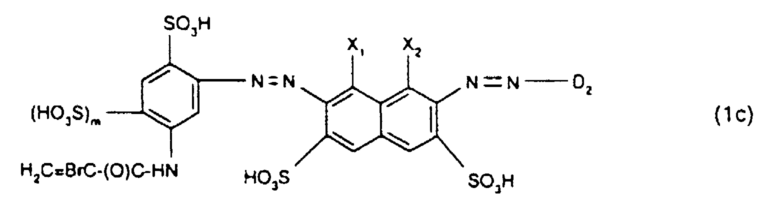 and 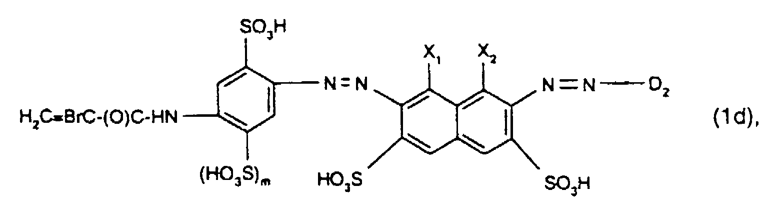
in which X₁ and X₂ are as defined above,
m is 0 or 1 and
D₂ is a radical of the formula 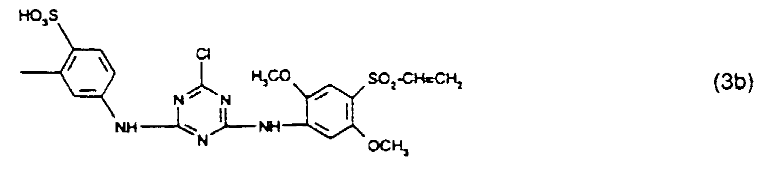
or

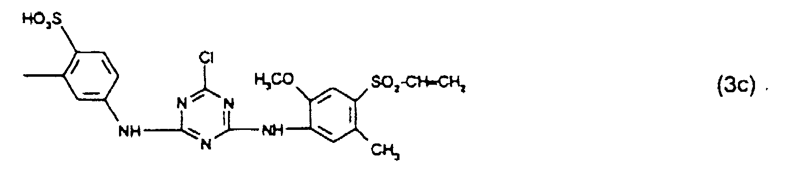

2. A compound according to claim 1, wherein X is fluorine or chlorine and R and R', independently of one another, are each hydrogen or C₁-C₄alkyl, in particular hydrogen.

3. A compound according to claim 1 or 2, wherein R₁ and R₂, independently of one another, are each hydrogen, methyl, methoxy or sulfo.

4. A compound according to any one of claims 1 to 3, wherein R₃ is a fibre-reactive radical of the formula (4a) as defined in claim 1.

5. A compound according to any one of claims 1 to 4, wherein D₁ is a radical of the formula 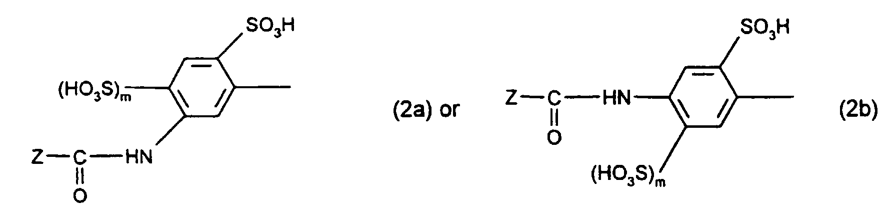 in which m is 0 or 1 and Z is as defined in claim 1.

6. A compound according to any one of claims 1 to 5, wherein D₂ is a radical of the formula 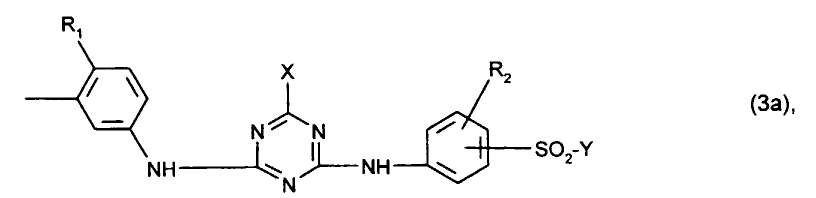 in which R₁ is hydrogen or sulfo, X is fluorine or chlorine, R₂ is hydrogen, methoxy or sulfo, and Y is vinyl or α̂-sulfatoethylsulfonyl.

7. A compound according to claim 1 of the formula 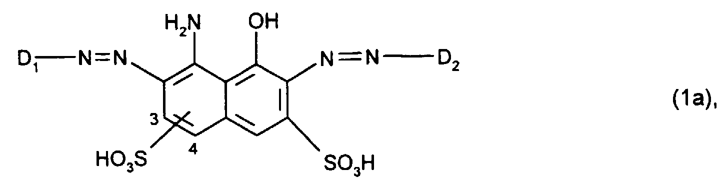 in which D₁ and D₂ are as defined in claim 1 and the second sulfo group is bonded to the 4 position or, preferably, to the 3 position of the 1-amino-8-hydroxynaphthalene ring.

8. A compound according to claim 1 of the formula 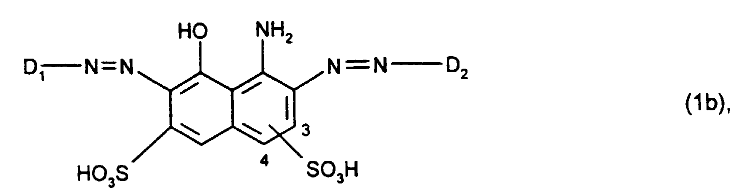 in which D₁ and D₂ are as defined in claim 1 and the second sulfo group is bonded to the 4 position or, preferably, to the 3 position of the 1-amino-8-hydroxynaphthalene ring.

9. A compound according to claim 7 of the formula (1a), in which the second sulfo group is bonded to the 3 position of the 1-amino-8-hydroxynaphthalene ring and D₁ is a radical of the formula (2a) as defined in claim 5 and D₂ is a radical of the formula (3a) as defined in claim 6.

10. A compound according to claim 8 of the formula (1b), in which the second sulfo group is bonded to the 3 position of the 1-amino-8-hydroxynaphthalene ring and D₁ is a radical of the formula (2a) as defined in claim 5 and D₂ is a radical of the formula (3a) as defined in claim 6.

11. A process for preparing a compound of the formula (1) according to claim 1, which comprises reacting about 1 mole equivalent each of a compound of the formula
D₁- NH₂ (5a),
D₂-NH₂ (5b)
and 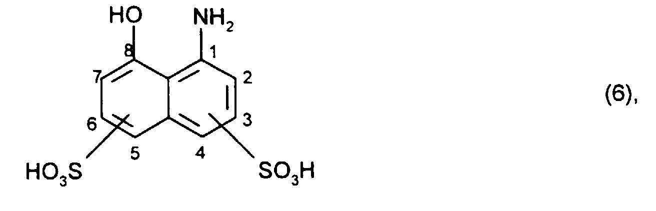 with one another by diazotization and coupling in any order, D₁, D₂, X₁ and X₂ each being as defined in claim 1.

12. Use of a compound of the formula (1) according to claim 1 for dyeing or printing hydroxyl-containing or nitrogen-containing fibre materials.

13. Use according to claim 12 for dyeing or printing cellulose-containing fibre materials, in particular cotton-containing fibre materials.

## Revendications

1. Composés de formule 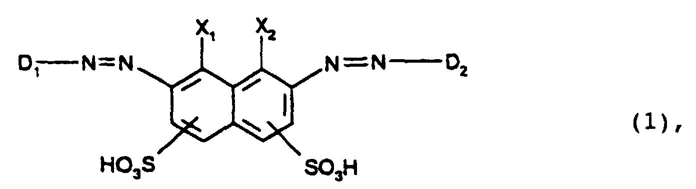 où l'une des variables X₁ et X₂ représente un groupe hydroxy et l'autre un groupe amino,
D₁ représente un reste de formule 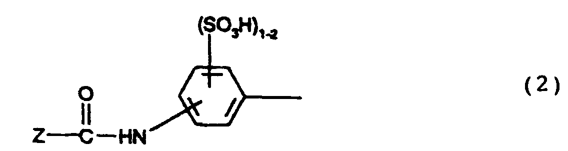 et
D₂ représente un reste de formule 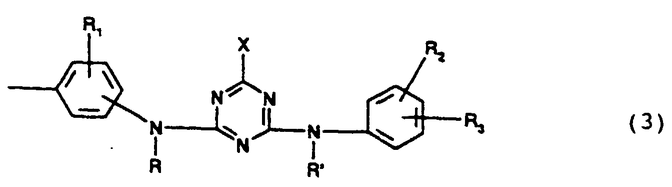
R et R' représentent, indépendamment l'un de l'autre, un atome d'hydrogène ou un groupe alkyle en C₁-C₄ éventuellement substitué,
R₁ et R₂ représentent, indépendamment l'un de l'autre, un atome d'hydrogène, des groupe sulfo, alkyle en C₁-C₄, alkoxy en C₁-C₄ ou un atome d'halogène,
R₃ représente un reste réactif sur la fibre de formule
-SO₂-Y (4a),
-CONH-(CH₂)ₙ-SO₂-Y (4b)
ou
-NH-CO-Z (4c),
X représente un atome d'halogène ou un groupe pyridinyle éventuellement substitué,
Y représente un groupe vinyle ou un reste -CH₂-CH₂-U et U est un groupe partant,
Z représente un groupe -CHT-CH₂T ou -CT=CH₂ et T représente un atome de brome ou de chlore, et
n est un entier de 1 à 6, et
des composés de formule 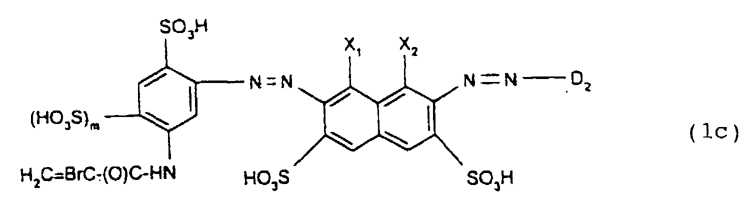 et 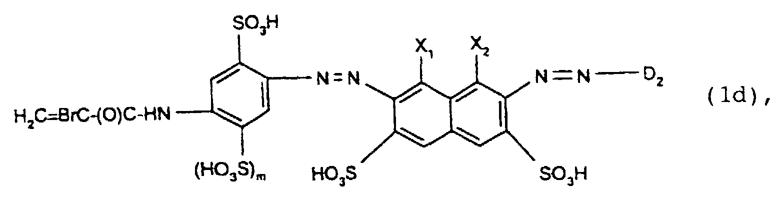 où
X₁ et X₂ possèdent les significations données ci-dessus,
m vaut 0 ou 1 et
D₂ représente un reste de formule 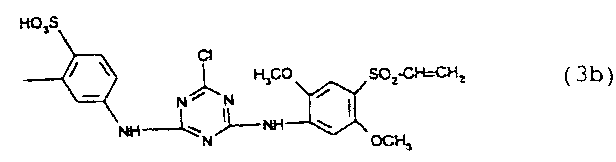
ou

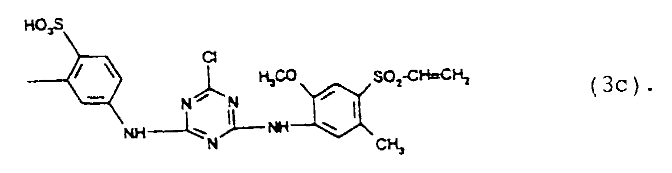

2. Composés selon la revendication 1, caractérisés en ce que X représente un atome de fluor ou de chlore et R et R' représentent, indépendamment l'un de l'autre, un atome d'hydrogène ou un groupe alkyle en C₁-C₄, en particulier un atome d'hydrogène.

3. Composés selon la revendication 1 ou 2, caractérisés en ce que R₁ et R₂ représentent, indépendamment l'un de l'autre, un atome d'hydrogène, des groupes méthyle, méthoxy ou sulfo.

4. Composés selon l'une des revendication 1 à 3, caractérisés en ce que R₃ représente un reste réactif sur la fibre de formule (4a) donnée à la revendication 1.

5. Composés selon l'une des revendications 1 à 4, caractérisés en ce que D₁ représente un reste de formule 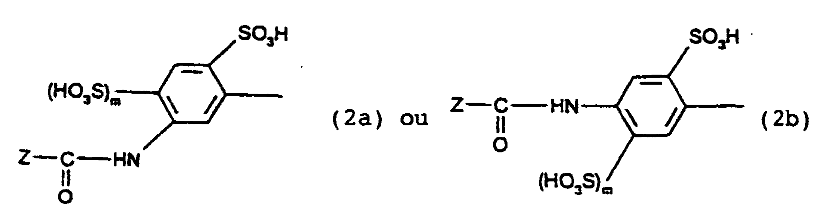 où m vaut 0 ou 1 et Z possède la signification donnée à la revendication 1.

6. Composés selon l'une des revendications 1 à 5, caractérisés en ce que D₂ représente un reste de formule 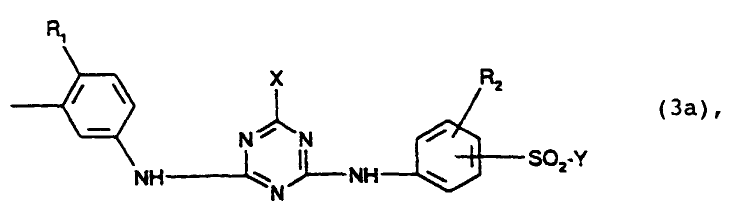 où R₁ représente un atome d'hydrogène ou un groupe sulfo, X représente un atome de fluor ou de chlore, R₂ représente un groupe méthoxy ou sulfo et Y représente un groupe vinyle ou β-sulfatoéthylsulfonyle.

7. Composés selon la revendication 1 de formule 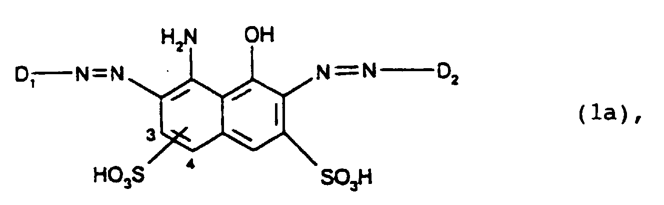 où D₁ et D₂ possèdent la signification donnée à la revendication 1 et le second groupe sulfo est lié en position 4, ou de préférence à la position 3, du noyau 1-amino-8-naphtol-hydroxynaphtalène.

8. Composés selon la revendication 1 de formule 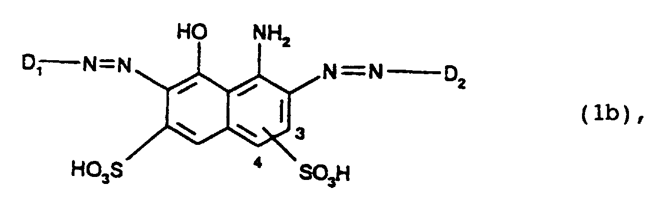 où D₁ et D₂ possèdent la signification donnée à la revendication 1 et le second groupe sulfo est lié en position 4, ou de préférence à la position 3, du noyau 1-amino-8-naphtol-hydroxynaphtalène.

9. Composés selon la revendication 7 de formule (la), où le second groupe sulfo est lié en position 3 du noyau 1-amino-8-naphtol-hydroxynaphtalène et D₁ représente un reste de formule (2a) donnée à la revendication 5, et D₂ représente un reste de formule (3a) donnée à la revendication 6.

10. Composés selon la revendication 8 de formule (1b), où le second groupe sulfo est lié en position 3 du noyau 1-amino-8-naphtol-hydroxynaphtalène et D₁ représente un reste de formule (2a) donnée à la revendication 5 et D₂ représente un reste de formule (3a) donnée à la revendication 6.

11. Procédé de préparation de composés de formule (1) selon la revendication 1, caractérisé en ce qu'on fait réagir environ 1 équivalent molaire d'un composé de formule
D₁-NH₂ (5a),
D₂-NH₂ (5b)
et 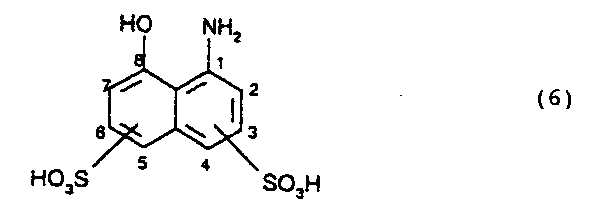 par diazotation et copulation en succession arbitraire, D₁, D₂, X₁ et X₂ possédant chacun la signification donnée à la revendication 1.

12. Utilisation de composés de formule (1) selon la revendication 1 pour la teinture ou l'impression de matières fibreuses contenant des groupes hydroxyle ou azotées.

13. Utilisation selon la revendication 12 pour la teinture ou l'impression de matières fibreuses cellulosiques, en particulier de matières fibreuses contenant du coton.
